Europäisches Patentamt

European Patent Office

Office européen des brevets

(19)

(11) Publication number: **0 029 868**
**B1**

(12) **EUROPEAN PATENT SPECIFICATION**

(45) Date of publication of patent specification: **18.04.84**

(51) Int. Cl.³: **A 23 L 1/01**, A 23 L 1/00

(21) Application number: **79302714.5**

(22) Date of filing: **28.11.79**

(54) **A process for simulating the taste and texture of deep fat fried foods and products so obtained.**

(43) Date of publication of application:
**10.06.81 Bulletin 81/23**

(45) Publication of the grant of the patent:
**18.04.84 Bulletin 84/16**

(84) Designated Contracting States:
**AT BE CH DE FR GB IT LU NL SE**

(56) References cited:
FR - A - 1 529 937
US - A - 3 501 316
US - A - 3 574 638

(73) Proprietor: **GENERAL FOODS CORPORATION**
**250 North Street**
**White Plains, N.Y. 10625 (US)**

(72) Inventor: **El-Hag, Nabil A.**
**RD no.l Tanglewylde Road**
**Lake Peekskill New York 10536 (US)**
Inventor: **Larson, Rober W.**
**4, Batten Road**
**Croton-on-Hudson, New York 10520 (US)**
Inventor: **Shanbhag, Sudhakar P.**
**57 Whitman Road**
**Yorktown Heights, New York 10598 (US)**

(74) Representative: **Baillie, Iain Cameron et al,**
**c/o Ladas & Parry Isartorplatz 5**
**D-8000 München 2 (DE)**

Courier Press, Leamington Spa, England.

A process for simulating the taste and texture of deep fat fried foods and products so obtained

Background of the invention

In the field of frozen foods, it has been the general practice to employ formed or sheet aluminum, plastic, wood and/or paper pulp food packages to merchandise the product. Such products have been unsatisfactory in that they function solely as a marketing package, have little utility outside the scope of a packaging container, generally use comparatively large quantities of materials and necessitate preparation of the food before it can be cooked.

Those concerned with the development of foods that have the distinctive taste of freshly fried foods have long recognized the need for a comestible which, after oven preparation, yields a product with a desired moisture content which contributes to a freshly fried texture and taste. Results have indicated that such high-quality, oven-reheated products cannot be made by simply manipulating par-fry (partially fry) cooking and reheating temperature and times.

One of the most critical problems confronting developers of frozen food comestibles has been to develop a uniform color and crust thickness in the comestible. Frozen foods cooked in typical baking pans are heated mainly by conduction, which results in localized burned areas.

Conventionally prepared foods, whether heated and/or cooked, often have overcooked exterior and/or undercooked interior portions. This problem has received the attention of appliance developers through the utilization of microwave ovens. However, the use of these ovens often produces products with an undesirable color, texture or taste to the consumer.

The color and appearance of food plays a vital role in consumer appeal. If it does not look right, consumers are less likely to consume it.

Another problem resulting from cooking frozen foods is the resulting soggy product or technically a food product whose moisture content is quite high. When the final cooked product has an uneven moisture distribution, the additional problem of uneven texture is presented.

Another area of concern has been the time it takes to prepare and produce the food. Most consumers wish to process the comestibles as quickly as possible without burning them.

Summary

The general purpose of this invention is to provide a novel technique for cooking frozen comestibles. One embodiment of the invention further provides a container for packaging frozen foods, particularly frozen french fried potatoes, chicken and fish. Such container may be used for cooking the food without removal therefrom, in a minimum of time and with a minimum of preparation beforehand.

It is an additional object of this invention to provide an article of packaged food comprising a frozen food and a novel container for the frozen food which is made from suitable ovenable material, and which is capable of serving as a cooking utensil for the food. It is a further object of this invention to provide a container for frozen foods which is simple and rugged in construction, commercially practical, economical to manufacture, and easily adapted to function as a cooking utensil for the frozen food.

Essentially, the new technique comprises packaging frozen food products in combination with a screen or other such uniform heat transferring device. During cooking, warm air convects around the food product from below as well as from above. The resulting primary mechanism of heating is natural convection and radiation. Because of the improved preparation technique, a more appetizing product results in both taste and appearance. The technique permits preparation of frozen foods in such manner so as to give a deep fat fried appearance when heated in an oven. It is preferable that the frozen foods be precooked, such as par-frying, also known as flash frying.

Other objects, features and advantages of this invention will be apparent from the following detailed description and appended claims, reference being made to the accompanying drawings forming a part of the specification.

Brief description of the drawings

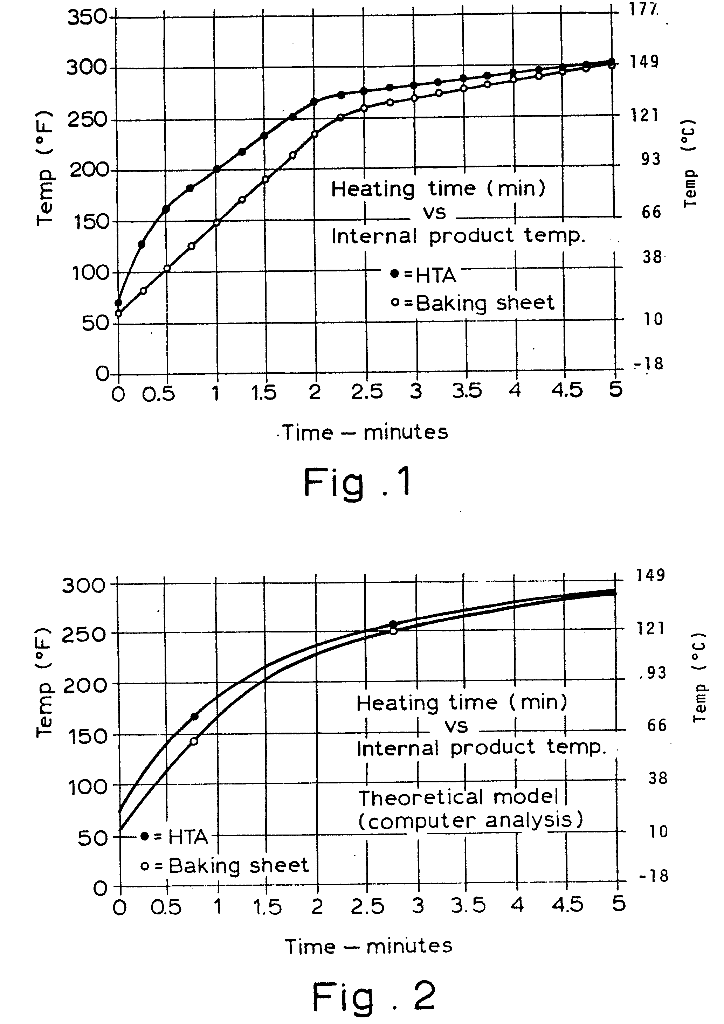

Figure 1 is a graph of the internal temperature of a par-fried potato product measured in degrees fahrenheit versus the heating time measured in minutes. The oven temperature averaged 450°F, (232°C) and a heat transferring apparatus (HTA) was employed. The apparatus consisted of U.S. Standard sieves mesh Number 8 having stainless steel wire of 0.028 inch (0.71 mm) diameter.

Figure 2 is a graph of the theoretical model, calculated by computer analysis, of internal product temperature measured in degrees fahrenheit versus the heating time measured in minutes when an oven maintains an average 450°F (232°C) temperature and the par-fried potato product was heated on a heat transferring device (HTA). The apparatus consisted of Number 8 mesh stainless steel wire of 0.028 inch (0.71 mm) diameter.

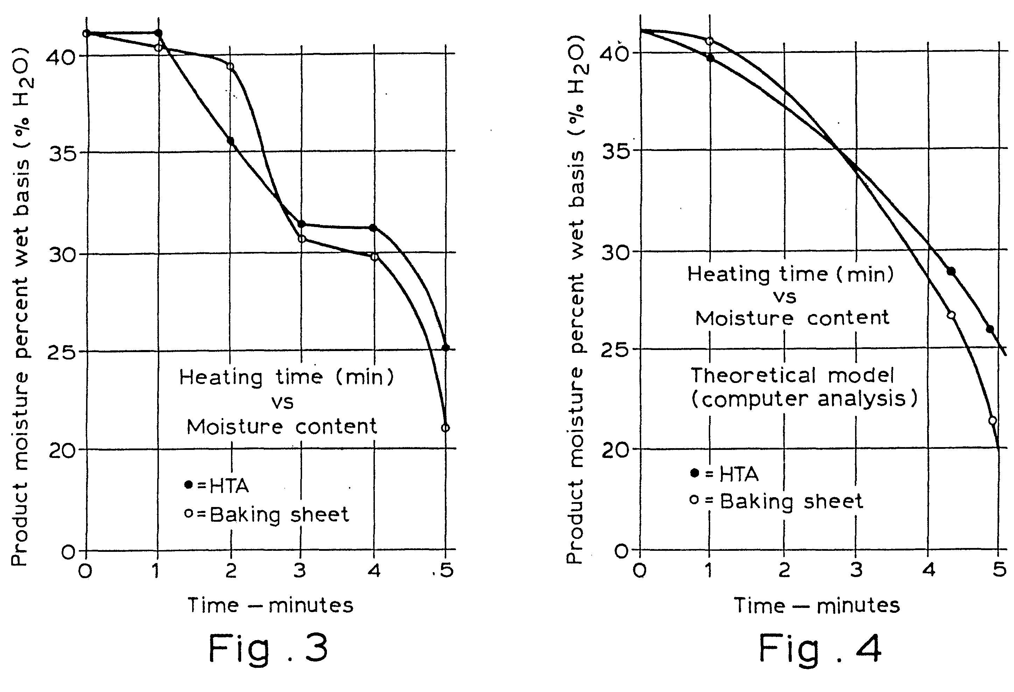

Figure 3 is a graph of the heating time measured in minutes versus the moisture content of the par-fried potato product measured on a wet basis for an oven maintained at an average temperature of 450°F (232°C), and employing a heat transferring device (HTA). The apparatus consisted of Number 8 mesh stainless steel wire of 0.028 inch (0.71 mm) diameter.

Figure 4 is a graph of the theoretical model, calculated by computer analysis, of the heating rime measured in minutes versus the par-fried potato product moisture content measured on a wet basis for an oven maintained at an average temperature of 450°F (232°C), and the comestible was heated on a heat transferring apparatus (HTA). The apparatus consisted of Number 8 mesh stainless steel wire of 0.028 inch (0.71 mm) diameter.

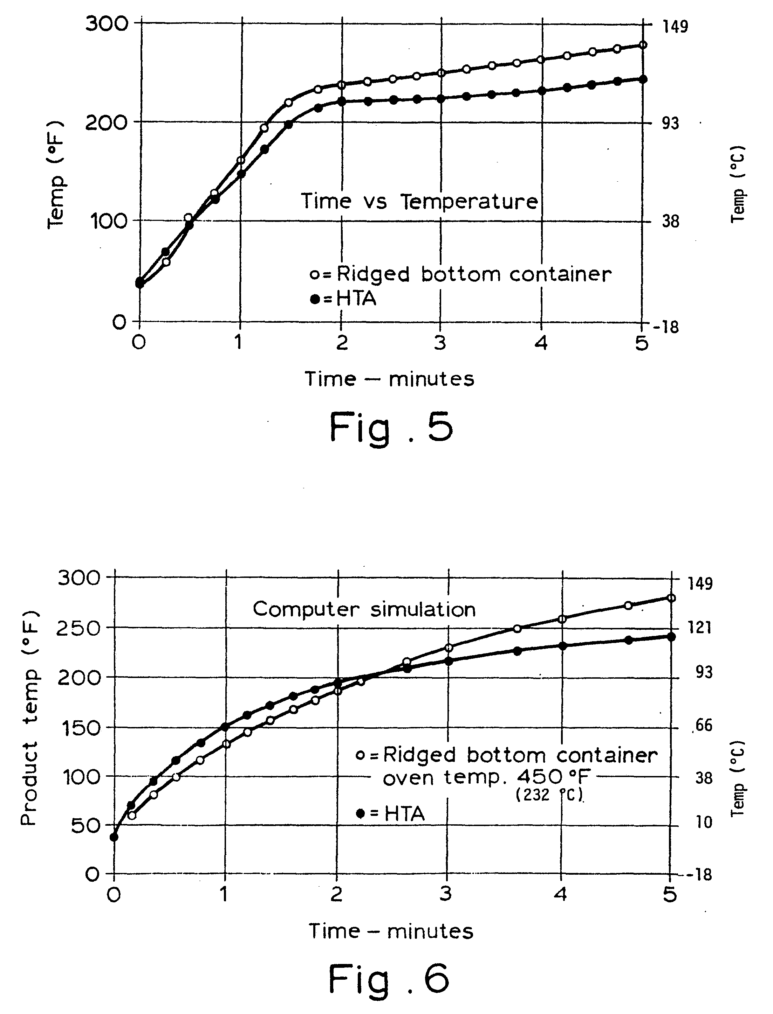

Figure 5 is a graph of the heating time measured in minutes versus the internal temperature of a par-fried potato product measured in degrees fahrenheit. The oven temperature was maintained at an average of 450°F (232°C) and a heat transferring apparatus (HTA) was utilized. The apparatus consisted of Number 8 mesh stainless steel wire of 0.028 inch (0.71 mm) diameter.

Figure 6 is a graph of the theoretical model, calculated by computer simulation, of heating time measured in minutes versus the internal par-fried potato product temperature measured in degrees fahrenheit when an oven maintains an average 450°F (232°C) temperature. A heat transferring apparatus (HTA) was utilized. The apparatus consisted of Number 8 mesh stainless steel wire of 0.028 inch (0.71 mm) diameter.

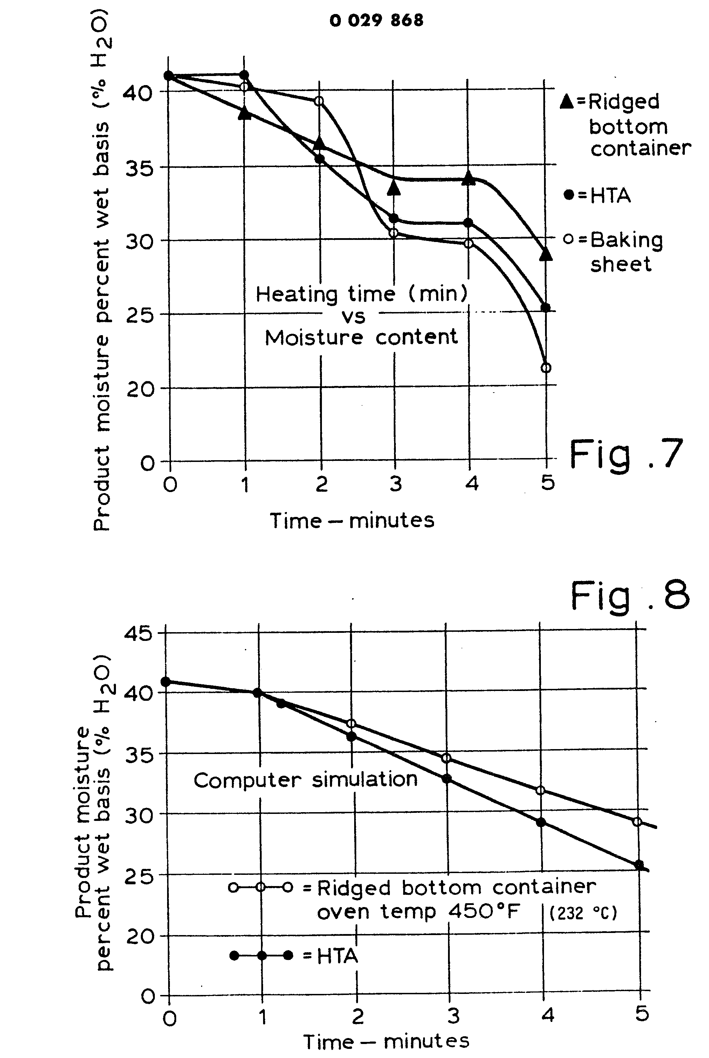

Figure 7 is a graph of the heating time measured in minutes versus the moisture content of the par-fried potato product measured on a wet basis for an oven maintained at an average temperature of 450°F (232°C). A heat transferring apparatus (HTA) was used. The apparatus consisted of Number 8 mesh stainless steel wire of 0.028 inch (0.71 mm) diameter.

Figure 8 is a graph of the theoretical model, calculated by computer simulation, of the heating time measured in minutes versus the moisture content of the par-fried potato product measured on a wet basis when an oven maintains an average 450°F (232°C) temperature. A heat transferring device (HTA) was employed. The apparatus consisted of Number 8 mesh stainless steel wire of 0.028 inch (0.71 mm) diameter.

Detailed description of the invention

The invention consists of a novel device and a unique technique for cooking frozen comestibles to reproduce color, taste, moisture and texture profiles of freshly deep fat fried comestibles. The frozen foods are packaged in combination with a heat transferring apparatus. A heat transferring apparatus or device is defined as a means of supporting discrete pieces of food in an oven, whereby the effect of conduction heating is minimized and the effect of convection heating is maximized. In order to maximize such type of heating, a minimum amount of structure should support the comestibles in the oven. A preferred embodiment of this invention would position the food products in a monolayer. This special arrangement would decrease piece-to-piece food contact and provide greater convection heating since there would be no obstacles to such heating principles.

One embodiment of this invention represents a screen or grid having a maximum amount of "free" or open space. As such, only a minimum amount of contact occurs between the screen or grid and the frozen food product. While the type and diameter of wire utilized to fabricate the grid-like members of the present invention is not critical, it has been found that the open area should be maximized, yet still be able to suspend the food product in the oven. Since the grid-like wire members are to be used in connection with food products, the wire members should also preferably be rust resistant and capable of being sanitized. Exemplary of such wire members are those which have been tin coated or which are fabricated from stainless steel and the like. When carbon steel or a material having a high coefficient of heat transfer is selected for use as the wire members, it is preferred that these types of wire members be coated with a material having a low coefficient of friction such as polytetrafluoroethylene, available under the trade name Teflon®, and the like. When thusly coated, a smooth, durable, sanitary surface is provided which is easy to mainintain and keep clean. Further, such a coating also acts as a heat insulating medium covering the highly conductive metal of the grid-like member and thereby eliminates or substantially reduces any "hot spots" in the assembled grid-like members.

Other embodiments can be made from various materials including thermoplastics, natural fibers, aluminum, wood and/or paper pulp. The heat transferring apparatus could also be a container, pouch, or package having a plurality of open spaces.

As stated above, uniformity of color and crust thickness is essential in producing an appetizing food product. Table I below gives comparison data for crust thickness obtained by cooking a par-fried french fry with 62% potato solids by various methods. As demonstrated, both suspension in air and the maximum heat transferring apparatus are superior in approximating the crust thickness of the deep fat fried control. However, with present technology suspension in air is difficult to perform. The heat transferring apparatus is the most feasible solution to the approximation of the cooking principles in deep fat frying. In the previously mentioned methods of food preparation, the warm air is allowed to circulate around the food product much like the oils circulate around the food product in deep fat frying. The heat transferring apparatus used in Table I consisted of Number 8 mesh stainless steel wire of 0.028 inch (0.71 mm) diameter having an open area of 60%. The ridged bottom tray used consisted of a molded aluminum tray having a plurality of peaks and valleys.

### TABLE I
Crust thickness for potatoes

| Product | Preparation device | | Crust thickness (in.) (mm) | |
|---|---|---|---|---|
| Potato product (62% solids) | Heat transferring apparatus in oven | Range<br>Ave. | .019—.025<br>.022 | 0.48—0.62<br>0.56 |
| Potato product (62% solids) | Baking pan in oven | Range<br>Ave. | .031—.048<br>.037 | 0.79—1.22<br>0.94 |
| Potato product (62% solids) | Ridged bottom tray in oven | Range<br>Ave. | .04—.047<br>.044 | 1.02—1.19<br>1.12 |
| Potato product (62% solids) | Suspended in air in oven | Range<br>Ave. | .019—.026<br>.022 | 0.48—0.66<br>0.56 |
| Potato product—Control | Deep fat fried | Range<br>Ave. | .015—.022<br>.018 | 0.38—0.56<br>0.46 |

Table II demonstrates the principle that the greater the amount of open area available, the more the crust thickness, cooking time, and organoleptic properties resemble the freshly deep fat fried french fries. Heat transferring apparatuses in the form of stainless steel screens were used in combination with a par-fried french fry potato product. Cooking times were varied to produce the best quality product based on appearance, color, texture and organoleptic properties.

As can be seen from the table, when using a relatively planar apparatus, highly desirable product is obtained using a heat transfer apparatus with free area greater than 35% and even more preferable, greater than 50%.

### TABLE II

| U.S. Standard sieves mesh | Wire diameter | | Open area % | Crust thickness average | | Cooking time minutes | Comments |
|---|---|---|---|---|---|---|---|
| | Inch | mm | | Inch | mm | | |
| 6 | .035 | 0.89 | 62 | .024 | 0.61 | 3.5 | Very good |
| 8 | .028 | 0.71 | 60 | .022 | 0.56 | 4 | Very good |
| 14 | .020 | 0.51 | 51 | .026 | 0.66 | 4.5 | Very good |
| 40 | .010 | 0.25 | 36 | .037 | 0.94 | 6 | Good (dry) |
| 60 | .008 | 0.20 | 30 | .041 | 1.04 | 6.5 | Fair |
| 120 | .004 | 0.10 | 31 | .047 | 1.19 | 6.5 | Fair |
| 400 | .001 | 0.02 | 36 | .045 | 1.14 | 6.5 | Fair |
| 4 | .047 | | 66 | .020 | 0.51 | 4—4.5 | Very good |
| 6 | .047 | | 52 | .026 | 0.66 | 4—4.5 | Good |
| 8 | .047 | 1.19 | 39 | .035 | 0.89 | 4—4.5 | Good |
| 10 | .047 | | 28 | .030 | 0.76 | 4—4.5 | Fair |
| 16 | .016 | | 55 | .027 | 0.69 | 4—4.5 | Very good |
| 20 | .016 | | 46 | .025 | 0.64 | 5 | Good |
| 24 | .016 | 0.41 | 38 | .033 | 0.84 | 3.5—4 | Fair |
| 30 | .016 | | 27 | .034 | 0.86 | 5—5.5 | Fair |
| 35 | .014 | 0.36 | 26 | .035 | 0.89 | 5—5.5 | Fair |
| 35 | .011 | 0.28 | 38 | .029 | 0.74 | 4.5—5 | Fair |
| 35 | .009 | 0.23 | 47 | .022 | 0.56 | 5 | Fair-Good |

To determine the commercial success for comestibles prepared utilizing a heat transfer apparatus, consumer preference was polled. In Tables III, IV and V, the apparatus consisted of Number 8 mesh stainless steel wire of 0.028 inch (0.71 mm) diameter.

Table III presents consumer preference data for frozen foods prepared by two different methods. The first method utilizes a heat transferring apparatus while the second method employs an ordinary baking pan. Thirty people judged three different types of foods. The results received show that on an average, people preferred the food cooked on a heat transferring apparatus as compared to a baking pan by a ratio of 2:1.

The same panelists then analyzed the food products which respect to the problems of texture,

4

appearance and moisture. In Table IV, thirty people evaluated commercially available batter-dipped frozen fish sticks. Both fish products were prepared at 425°F for twenty-five minutes, as the package instructions recommended. The resultant product prepared on the heat transferring apparatus had a uniform crust thickness of 0.045 inches (1.14 mm) as compared to an average 0.075 inches (1.9 mm) normally obtained when using a baking pan.

In Table V, thirty people evaluated commercially available pre-fried frozen chicken breast. One portion of chicken was cooked on the baking sheet at 400°F (204°C) for 15 minutes, then turned over on their other side for an additional 15 minutes as the package instructions directed. The other sample of chicken was cooked on the heat transferring apparatus at 400°F (204°C) for 30 minutes without any turning.

TABLE III
Average consumer preference for prepared frozen food

|  | Fish | Chicken | Potatoes |
| --- | --- | --- | --- |
| Heat transferring apparatus | 78% | 64% | 60% |
| Baking pan | 22% | 36% | 40% |

TABLE IV
Consumer preference for attributes of prepared frozen fish sticks

|  | Texture | Appearance | Moistness |
| --- | --- | --- | --- |
| Heat transferring apparatus | 77% | 80% | 79% |
| Baking pan | 23% | 20% | 21% |

TABLE V
Consumer preference for attributes of prepared frozen chicken

|  | Texture | Appearance | Moistness |
| --- | --- | --- | --- |
| Heat transferring apparatus | 57% | 58% | 52% |
| Baking pan | 43% | 42% | 48% |

Another aspect of this invention is the packaging of frozen comestibles on or in a heat transferring apparatus, such as a screen, net or lace-like element which may either be preformed or expandable and in the form of a single layer or pouch. The package composition may comprise a regular spaced embossed pattern on at least one surface of each single layer sheet heat transferring apparatus. The combination of two single layer sheets would form a pouch in which the comestibles would be heated. The sheet would be drawn sufficiently to develop a preferential weakness in one direction. When stretched in the direction traverse to the first drawing, a multiplicity of short splits appear and develop into a net-like structure.

Packages of various shapes and sizes can be produced according to procedures known in the art. After the desired contents have been placed in the package, it can be readily sealed or overwrapped. Packages can be prepared with both sides of the packaging material embossed or only one side as long as open areas may be created to allow a minimum amount of contact between the apparatus and comestible and permit convective and radiant heating. For example, food packages can be prepared by fusing the edges of two embossed drawn sheets of packaging material of this invention. If desired, tabs or loops can be provided by which the package can be grasped when stretching. The provision of tabs or loops is beneficial in that they indicate the direction in which the package is to be stretched. It may also be desirable to seal a ribbon or string inside the package to prevent its being stretched so far that it tears.

While the present invention has been described in conjunction with french fries, chicken, and fish, it is to be clearly understood that it is not to be limited in this respect. The heat transferring apparatus can also be used with any food which requires the collection and absorption of cooking juices. In this special embodiment of this invention, an absorbent medium is incorporated with the heat transferring device which is particularly effective as a means for preventing drippings during cooking, from creating a dirty oven, or building up around the food product. With this arrangement, any danger of drippings passing out of the device as a result of the maximum open area is eliminated. The incorporation of the absorbent medium may be accomplished by coating it onto the screen or layering the apparatus with a perforated sheet such that an amount of free area remains so as not to impede the free flow of air. The latter embodiment may consist of three layered materials (perforated aluminum, oven-resistant absorbent material, perforated aluminum) which has been indented to provide minimum contact points

5

and then hole punched to provide the free flow of natural convection heating. By way of explanation and not limitation, the absorption of the juices is best characterized as a wick-type phenomena.

Another aspect of this special embodiment is a single layer indented and perforated heat transferring apparatus. The indentations create a waffling effect and are in the form of troughs and crests. The perforations are of two types. The first kind of perforation creates the majority of open area so as to optimize heat transference by convection and radiation, while simultaneously providing minimum contact between the food and apparatus. The indentations also contribute to providing minimum contact between the food and apparatus. When using this embodiment, open areas as small as 20% will yield good quality product. The second type of perforations is nearly pinlike. These create a surface tension on the heat transferring apparatus which collects and holds the oils that are released during cooking.

Still yet another embodiment of this invention relates to an improved cooking utensil for supporting and cooking foods within an oven. In this embodiment of the invention, rather than the heat transferring apparatus being designed having a narrow thickness, the apparatus would have a broad thickness with long tapered holes. These tapered holes would create a higher velocity of warm air than would ordinarily occur with holes in a thin body such as sheet metal. The beneficial effect of the higher velocity warm air jets lies in their increased ability to do work, to cook food in this instance.

As shown above, it is essential that the heat transferring device have as little contact with the food product as possible. The ideal system approaches suspension of a food product in the cooking apparatus without contacting it with any device.

Referring now to Figure 1, one may graphically note the higher internal product temperature which results when using the heat transferring device rather than the conventional cookie sheet or baking pan. Thermodynamically, this translates into a mechanism of heat transfer differing from the conventional cooking utensil. Figure 2 confirms the experimental internal product temperature data in accordance with a computer simulated model.

The overall heat transfer is more uniform in products prepared on the heat transferring apparatus than on the baking pan. As has been shown, this corresponds to product quality which is improved at higher percentages of free area.

Heat transfer uniformity is determined by comparing the total heat transfer coefficients for each side of a food product. In Table VI, surface coefficients of heat transfer into a 0.25 inch (6.4 mm) shoe-string potato were calculated. The heat transferring apparatus employed was a Number 8 mesh stainless steel wire of 0.028 inch (0.71 mm) diameter.

In the baking sheet, the ratio of total heat transfer between the bottom surface and the side surface of a comestible is 11:1, whereas in the heat transferring apparatus, the ratio of total heat transfer between the bottom surface and the side surface of a comestible is 1.8:1. In deep fat frying, this same ratio would be 1:1 since the oils circulate around the comestible. Therefore, in simulating deep fat frying, it is preferred that the conductive heat be minimized and the convective heat be maximized. Additionally, it is preferred to make the ratio of the total heat transfer between every two surfaces of the comestible less than 5:1. At ratios of 2:1 and below, more preferred comestibles are obtained.

TABLE VI
Heat transfer coefficients

| | Surface | Mechanism | Coefficient (BTU/ft²-F-hr) | (W/m²-K-hr) |
|---|---|---|---|---|
| Baking sheet | Bottom | Conduction | 10.0 | 56.8 |
| | Each side | Convection | 0.9 | 5.1 |
| | Top | Convection | 0.9 | 5.1 |
| Heat transferring apparatus | Bottom | Convection | 1.32 | 7.49 |
| | | Radiation | 2.64 | 14.99 |
| | Each side | Convection | 2.2 | 12.5 |
| | Top | Convection | 2.2 | 12.5 |

To compute convective heat transfer coefficients, air velocity over cooking appliances in an oven at an average temperature of 450°F (232°C) had to be determined. This was measured by a single channel laser anemometer system (15 milliwatt, Helium-Neon laser, wave length=632.8 nanometers). Electric oven air velocity over a heat transferring apparatus increased with increased percent free area of the apparatus. According to standard heat transfer principles, the higher air velocity reduces the thermal boundary layer surrounding the cooking product, resulting in an increased convective heat transfer.

From the values in Table VII, the percentage of conductive, convective and radiant heating was determined. These percentages distinctly show that different heat transfer mechanisms are involved in cooking foods on a baking sheet and a heat transferring apparatus.

# O 029 868

TABLE VII
Heat transfer mechanisms

|  | Conduction | Convection | Radiation |
| --- | --- | --- | --- |
| Heat transferring apparatus | Negligible | 75% | 25% |
| Baking sheet | 79% | 21% | Negligible |

Figure 3 graphically shows that the moisture content of the final cooked product is higher when using the heat transferring apparatus than a conventional baking sheet. However, quite surprisingly, the utilization of the apparatus creates a lower mass transfer rate as opposed to the baking sheet. One would normally predict that a higher mass transfer rate as predicated by a function of the higher internal product temperature as shown in Figures I and II would result. Unexpectedly, just the opposite occurs to yield a more moist food product with less shrinkage.

The following hypothesis is used to explain this phenomena of the invention. However, this hypothesis of the existence and mechanism by which the invention may operate, is not designed to limit the scope of the present invention, but is advanced only as a means of explaining the effects produced.

A metal sheet has a high energy flux which conducts energy quite rapidly. The primary method of energy transference is conduction. This causes moisture excitation which in turn drives the moisture from the product in the form of vapor. The moisture is driven from the bottom to the top of the food product. The bottom layer, depleted of moisture case hardens and acts as an insulator. This results in a product which is characterized as having a bottom that is crisp and a top that is soggy. As would be expected, the smaller the food product, the less this differential may be observed.

On the other hand, the heat transferring apparatus has a more uniform energy flux which radiates and convects energy rapidly and uniformly. Because of the open areas in the apparatus, the primary energy transferences are convection and radiation.

The moisture diffuses out from the food product on all sides. A uniform crust is formed on the envelope of the comestible. As the warm air continually circulates around the food product, the porosity of the envelope is reduced trapping moisture uniformly within the interior of the product. Relative to the interior of the product, the crust would contain most of the oil which is an attribute of deep fat fried foods.

Temperature measurements above the heat transferring apparatus are greater than above a baking sheet. This finding confirms the unique heat transfer phenomena.

As stated previously, the food product cooked on the apparatus has an unexpected higher final moisture content. This results in minimizing food shrinkage.

Figure 4 relates to the theoretical model, developed by computer analysis, which provides product moisture content predictions in close agreement with experimental data.

As stated previously, it is desired to maximize the amount of open area of the heat transferring apparatus. At a minimum, this requires an opening on the bottom of the apparatus to allow heated air to flow past the food product. The apparatus is separate and distinct from a ridged solid bottom tray. Although the ridged bottom tray encompasses the concept of having a minimum contact with the food product, it does not produce synergistic results of crust thickness, moisture content, deep fat fried appearance or texture profiles of freshly deep fat fried comestibles like the heat transferring apparatus.

Referring now to Figures 5 and 6, one may graphically note the higher internal product temperature produced by the heat transferring apparatus before the inflex point. Again, this result corresponds to an unexpected lower rate of moisture loss for the apparatus. After the inflex point, the ridged bottom container demonstrates a higher product temperature. This is generally caused by the large extended metal surface area of the ridges which conducts the heat. However, the temperature distribution is not uniform. The concentrated temperature distribution point at the ridges results in slight browning or localized crust formation at the ridge site and an uneven moisture distribution throughout the comestible. This is objectionable when attempting to produce a uniform crust.

Referring now to Figure 7, one notes that generally, a higher internal product temperature will cause a lower rate of moisture loss. However, the higher the temperature, the more moisture excitation one would expect. When a crust is formed on the envelope of the food product, the porosity of this envelope is reduced. This results in lower moisture loss and a rise in internal temperature. The heating principles for the three cooking utensils are as follows. The ridged bottom container heats primarily by conduction and convection. The heat transferring apparatus heats primarily by convection and radiation. The baking sheet heats primarily by conduction.

The method of heating is directly correlated to the internal product temperature which is related to the product moisture. Through the utilization of the heat transferring apparatus, the resultant food product can be characterized as not being too soggy as produced by the ridged bottom container nor too dry or brittle as produced by the baking pan.

7

**0 029 868**

Figure 8 provides product moisture content predictions based on a computer simulated model in close agreement with the experimental data.

It is to be understood, that the present invention also includes unique techniques disclosed herein for cooking frozen foods. The food package as finally rendered may be made suitable for cooking in a broiler arrangement, an oven, a toaster, a toaster-oven, or by other suitable means as may be selected.

Once the food has been packaged, it may be chilled so that the food product is frozen. Likewise, the food product may not only be frozen prior to being packaged, but also at anytime during the packaging process. It is also within the purview of the invention that the ultimate user wrap, enclose, or station the food product on the heat transferring apparatus for its ultimate intended purpose. The ultimate intended purpose is to provide a technique for cooking the food product as has been stated. Consequently, the ingenuity of the present invention is such that a package is provided which may protect the food product while it is being refrigerated and maintained in the store and then may be utilized as a disposable cooking utensil.

From the above detailed description of the invention, it will be obvious that the heat transferring apparatus can be applied in the preparation of various selected types of fresh and frozen solid materials that either contain oil or have oil applied in order to render the prepared product having those characteristics of deep fat fried foods.

## Claims

1. A frozen food package which comprises an ovenable support member having a plurality of openings whereby the effect of conduction heating is minimized and the effect of natural convection heating is maximized, in combination with discrete pieces of frozen, par-fried comestibles.

2. The frozen food package as set forth in claim 1, wherein the openings amount to a free space greater than 20% of the support members surface area.

3. The frozen food package as set forth in claim 1, wherein the comestibles are selected from the group consisting of chicken, fish, and potatoes.

4. The frozen food package as set forth in claim 1, wherein the frozen comestibles are in a monolayer on the ovenable support members.

5. The frozen food package as set forth in claim 1, wherein the effect of minimizing conduction and maximizing convection heating is such that the ratio of the total heat transfer between every two surfaces is less than 5:1.

6. A method of heating discrete pieces of frozen par-fried foods in an oven in order to obtain a deep fat fried appearance and texture by supporting the frozen discrete food pieces in an oven in a manner which minimizes piece to piece contact by means of an ovenable support member having a plurality of openings, whereby the effect of conduction heating is minimized and the effect of natural convection heating is maximized.

7. The method of claim 6, wherein the food pieces are supported in a monolayer.

8. The method of claim 6, wherein the supporting of the frozen food pieces is accomplished by an apparatus that has open spaces greater than 20% of the apparatus surface area.

9. The method of claim 6, wherein the food pieces are selected from the group consisting of chicken, fish, and potatoes.

10. The method of claim 6, wherein the effect of minimizing conduction and maximizing natural convection is such that the ratio of the total heat transfer between every two surfaces of a comestible is less than 5:1.

## Patentansprüche

1. Packung mit tiefgekühltem Nahrungsmittelgut mit einem ofenfesten Tragelement, das mehrere Öffnungen besitzt, so daß die Erwärmung durch Wärmeleitung möglichst gering und die Erwärmung durch natürliche Konvektion möglichst groß ist, in Kombination mit diskreten Stücken aus tiefgekühltem anfritierten Nahrungsmittelgut.

2. Packung mit tiefgekühltem Nahrungsmittelgut nach Anspruch 1, dadurch gekennzeichnet, daß die Öffnungen eine offene Fläche von mehr als 20% der Fläche des Tragelements bilden.

3. Packung mit tiefgekühltem Nahrungsmittelgut nach Anspruch 1, dadurch gekennzeichnet, daß das Nahrungsmittelgut aus Geflügel, Fisch oder Kartoffeln besteht.

4. Packung mit tiefgekühltem Nahrungsmittelgut nach Anspruch 1, dadurch gekennzeichnet, daß das tiefgekühlte Nahrungsmittelgut auf dem ofenfesten Tragelement eine einzige Lage bildet.

5. Packung mit tiefgekühltem Nahrungsmittelgut nach Anspruch 1, dadurch gekennzeichnet, daß die Erwärmung durch Wärmeleitung so gering und die Erwärmung durch Konvektion so groß ist, daß das Verhältnis der Gesamt-Wärmeübertragungszahlen an zwei beliebigen Flächen kleiner ist als 5:1.

6. Verfahren zum Erhitzen von diskreten Stücken aus tiefgekühltem anfritiertem Nahrungsmittelgut in einem Backrohr zum Herstellen eines Gutes, das im Aussehen und in der Textur fritiertem Nahrungsmittelgut ähnelt, wobei die diskreten Stücke des tiefgekühlten Nahrungsmittelgutes in einem Ofen derart abgestützt werden, daß die Stücke einander möglichst wenig berühren, und ein

8

ofenfestes Tragelement verwendet wird, das mehrere Öffnungen besitzt, so daß die Erwärmung durch Wärmeleitung möglichst gering und die Erwärmung durch natürliche Konvektion möglichst groß ist.

7. Verfahren nach Anspruch 6, dadurch gekennzeichnet, daß die Stücke aus dem Nahrungsmittelgut in einer einzigen Lage abgestützt werden.

8. Verfahren nach Anspruch 6, dadurch gekennzeichnet, daß die Stücke aus tiefgekühltem Nahrungsmittelgut auf einer Einrichtung abgestützt werden, deren offene Fläche größer ist als 20% der Fläche der Einrichtung.

9. Verfahren nach Anspruch 6, dadurch gekennzeichnet, daß die Stücke aus dem Nahrungsmittelgut aus Geflügel, Fisch oder Kartoffeln bestehen.

10. Verfahren nach Anspruch 6, dadurch gekennzeichnet, daß die Erwärmung durch Wärmeleitung so gering und die Erwärmung durch Konvektion so groß ist, daß das Verhältnis der Gesamt-Wärmeübertragungszahlen an zwei beliebigen Flächen kleiner ist als 5:1.

**Revendications**

1. Emballage pour aliment congelé, qui comprend un élément de support pouvant aller au four, comportant une série d'ouvertures, de telle sorte que l'effet de chauffage par conduction soit réduit au minimum et que l'effet de chauffage par convection naturelle soit porté au maximum, ainsi que des morceaux séparés de produits comestibles partiellement frits, congelés.

2. Emballage pour aliment congelé suivant la revendication 1, caractérisé en ce que les ouvertures forment un espace libre supérieur à 20% de l'aire des éléments de support.

3. Emballage pour aliment congelé suivant la revendication 1, caractérisé en ce que les comestibles sont choisis dans le groupe comprenant les poulets, les poissons et les pommes de terre.

4. Emballage pour aliment congelé suivant la revendication 1, caractérisé en ce que les comestibles congelés sont sous la forme d'une seule couche sur les éléments de support pouvant aller au four.

5. Emballage pour aliment congelé suivant la revendication 1, caractérisé en ce que l'effet de réduction au minimum du chauffage par conduction et d'amenée au maximum du chauffage par convection est tel que le rapport du tranfert de chaleur total entre deux surfaces d'un comestible est inférieur à 5/1.

6. Procédé de chauffage de morceaux distincts d'aliments partiellement frits, congelés, dans un four afin d'obtenir un aspect et une texture d'aliment passé à la friture, caractérisé en ce que les morceaux d'aliments distincts, congelés, sont supportés dans un four d'une manière qui réduit au minimum le contact de morceau à morceau grâce à un élément de support pouvant aller au four, comportant une série d'ouvertures, de telle sorte que l'effet de chauffage par conduction soit réduit au minimum et que l'effet de chauffage par convection naturelle soit porté au maximum.

7. Procédé suivant la revendication 6, caractérisé en ce que les morceaux d'aliments sont supportés sous la forme d'une seule couche.

8. Procédé suivant la revendication 6, caractérisé en ce qu'on réalise le support des morceaux d'aliments congelés par un appareil qui comporte des espaces ouverts supérieurs à 20% de son aire.

9. Procédé suivant la revendication 6, caractérisé en ce que les morceaux d'aliments sont choisis dans le groupe comprenant les poulets, les poissons et les pommes de terre.

10. Procédé suivant la revendication 6, caractérisé en ce que l'effet de réduction au minimum de la conduction et d'amenée au maximum de la convection naturelle est tel que le rapport du transfert de chaleur total entre deux surfaces d'un produit comestible est inférieur à 5/1.

Fig .1

Fig . 2

Heating time (min)
vs
Moisture content

Theoretical model (computer analysis)

● = HTA
o = Baking sheet

Time — minutes

Fig. 4

Product moisture percent wet basis (% H₂O)

Heating time (min)
vs
Moisture content

● = HTA
o = Baking sheet

Time — minutes

Fig. 3

Product moisture percent wet basis (% H₂O)

Fig . 5

Fig .6

**0 029 868**

Fig .7

Product moisture percent wet basis (% H₂O) vs Time — minutes

Heating time (min) vs Moisture content

▲ = Ridged bottom container
● = HTA
○ = Baking sheet

Fig .8

Product moisture percent wet basis (% H₂O) vs Time — minutes

Computer simulation

○—○—○ = Ridged bottom container oven temp 450°F (232 °C)
●—●—● = HTA

4